# EUROPÄISCHE PATENTANMELDUNG

(11) **EP 3 338 923 A1**
(43) Veröffentlichungstag der Anmeldung: **27.06.2018**
(21) Anmeldenummer: 16206533.8
(22) Anmeldetag: 23.12.2016
(51) Int. Cl.: B23B 51/04

(54) **BOHRKRONE MIT EINEM SPIRALROHRFÖRMIGEN BOHRSCHAFT UND VERFAHREN ZUR HERSTELLUNG EINES SPIRALROHRFÖRMIGEN BOHRSCHAFTES FÜR EINE BOHRKRONE**

(71) Anmelder: HILTI Aktiengesellschaft, 9494 Schaan (LI)
(72) Erfinder: Schroeder, Florian, 7304 Maienfeld (CH); Weber, Christoph, 6315 Oberägeri (CH); Schneider, Roland, 6824 Schlins (AT)
(74) Vertreter: Hilti Aktiengesellschaft Corporate Intellectual Property

(57) **Zusammenfassung**

Bohrkrone (10) zum Erstellen eines Bohrloches (25) mit einem Bohrlochdurchmesser (d₂) und einem Bohrkern (24) mit einem Kerndurchmesser (d₁) in einem Werkstück (23), aufweisend einen Bohrschaftabschnitt (11) mit einem rohrförmigen Bohrschaft (18), einen Aufnahmeabschnitt (12) mit einem Deckel (19) und einem Einsteckende (20) und eine Verbindungseinrichtung (13), die den Bohrschaftabschnitt (11) und Aufnahmeabschnitt (12) lösbar oder unlösbar miteinander verbindet, wobei der rohrförmige Bohrschaft (18) als geschweißtes Spiralrohr ausgebildet ist.

## Beschreibung

### Technisches Gebiet

Die vorliegende Erfindung betrifft eine Bohrkrone mit einem spiralrohrförmigen Bohrschaft gemäß dem Oberbegriff des Anspruchs 1 und ein Verfahren zur Herstellung eines spiralrohrförmigen Bohrschaftes für eine solche Bohrkrone gemäß dem Oberbegriff des Anspruchs 13.

### Stand der Technik

Bohrkronen bestehen aus einem rohrförmigen Bohrschaft, einem Deckel, der den rohrförmigen Bohrschaft verschließt, und einem Einsteckende, über das die Bohrkrone in der Werkzeugaufnahme eines Kernbohrgerätes befestigt wird. Der Deckel und das Einsteckende sind Teile eines Aufnahmeabschnittes der Bohrkrone und der Bohrschaft ist Teil eines Bohrschaftabschnittes der Bohrkrone. Der Bohrschaftabschnitt und der Aufnahmeabschnitt sind mittels einer Verbindungseinrichtung lösbar oder unlösbar verbunden.

Bei bekannten Bohrkronen werden feste Bohrkronen und Bohrkronen, die mit separaten Schneidabschnitten kombiniert werden können, unterschieden. Feste Bohrkronen weisen ein oder mehrere Schneidsegmente auf, die mit dem Bohrschaft unlösbar verbunden sind, wobei die Schneidsegmente am Bohrschaft verschweißt, verlötet, verklebt oder in einer anderen geeigneten Befestigungsart am Bohrschaft befestigt sind. Bei Bohrkronen, die mit separaten Schneidabschnitten kombiniert werden, sind die Schneidabschnitte über eine lösbare weitere Verbindungseinrichtung mit der Bohrkrone verbindbar. Die Schneidabschnitte umfassen einen Ringabschnitt und ein oder mehrere Schneidsegmente, die am Ringabschnitt befestigt sind.

Im Bohrbetrieb erzeugt eine Bohrkrone in einem Werkstück einen Bohrkern mit einem Kerndurchmesser und ein Bohrloch mit einem Bohrlochdurchmesser. Die Schneidsegmente bilden einen Schneidring mit einem Innendurchmesser, der dem Kerndurchmesser entspricht, und einem Außendurchmesser, der dem Bohrlochdurchmesser entspricht. Beim Bohren wird zwischen Nassbohren und Trockenbohren unterschieden. Bohrkronen zum Nassbohren (Nassbohrkronen) unterscheiden sich im Aufbau von Bohrkronen zum Trockenbohren (Trockenbohrkronen). Beim Nassbohren ist eine Kühl- und Spülflüssigkeit erforderlich, die als Kühlflüssigkeit die Schneidsegmente der Bohrkrone oder des Schneidabschnittes kühlt und als Spülflüssigkeit Bohrklein aus dem Bohrloch abtransportiert. Saubere Kühl- und Spülflüssigkeit wird in der Regel über einen Innenspalt zwischen dem Bohrkern und dem Bohrschaft zugeführt und mit Bohrklein versetzte, verbrauchte Kühl- und Spülflüssigkeit über einen Außenspalt zwischen dem Bohrschaft und dem Bohrloch abgeführt.

Bohrkronen, die sowohl einen Innenspalt zwischen Bohrkern und Bohrschaft als auch einen Außenspalt zwischen Bohrschaft und Bohrloch aufweisen, werden im Bohrbetrieb ausschließlich über die Schneidsegmente geführt, der gesamte Bohrschaft weist keine Führung auf. Die mangelnde Führung des Bohrschaftes kann während des Bohrens zu unerwünschten Bewegungen der Bohrkrone führen, die die Qualität des Bohrloches verschlechtern. Je stärker die Bewegungen der Bohrkrone sind, umso stärker kann die Geometrie des Bohrloches von der Kreisform abweichen. Außerdem können durch Krafteinwirkung des Bohrkerns oder des Bohrloches auf den Bohrschaft elastische Verformungen des Bohrschaftes auftreten.

Um die Führung einer Bohrkrone zu verbessern, sind Bohrkronen ohne Innenspalt und/oder ohne Außenspalt bekannt, wobei die Kühl- und Spülflüssigkeit über spezielle Transportkanäle in der Außenseite des Bohrschaftes transportiert wird. Nachteilig ist, dass der Bohrschaft an der Innenseite eine große Kontaktfläche zum Bohrkern und an der Außenseite eine große Kontaktfläche zum Bohrloch aufweist. Die großen Kontaktflächen an der Innen- und Außenseite des Bohrschaftes führen zu einer starken Reibung. Je grösser die Reibung zwischen dem Bohrschaft und dem Bohrkern bzw. dem Bohrschaft und dem Bohrloch ist, umso geringer sind der Bohrfortschritt der Bohrkrone bei gleicher Leistung des Kernbohrgerätes und die Lebensdauer des Bohrschaftes.

### Darstellung der Erfindung

Die Aufgabe der vorliegenden Erfindung besteht darin, eine Bohrkrone dahingehend weiterzuentwickeln, dass die Stabilität und die Führung des Bohrschaftes beim Bohren, insbesondere beim Nassbohren mit einer Kühl- und Spülflüssigkeit, verbessert sind. Außerdem sollen der Bohrfortschritt der Bohrkrone erhöht und/oder die Lebensdauer des Bohrschaftes verlängert werden.

Diese Aufgabe wird bei der eingangs genannten Bohrkrone erfindungsgemäß durch die Merkmale des unabhängigen Anspruchs 1 und bei dem eingangs genannten Verfahren erfindungsgemäß durch die Merkmale des unabhängigen Anspruchs 13 gelöst. Vorteilhafte Weiterbildungen sind in den abhängigen Ansprüchen angegeben.

Die Bohrkrone ist erfindungsgemäß dadurch gekennzeichnet, dass der rohrförmige Bohrschaft als geschweißtes Spiralrohr ausgebildet ist, wobei ein Bohrschaft, der als geschweißtes Spiralrohr ausgebildet ist, auch als spiralrohrförmiger Bohrschaft bezeichnet wird. Ein geschweißtes Spiralrohr weist mindestens eine spiralförmige Verbindungsschweißnaht auf, die für den Bohrschaft als Versteifungselement wirkt und die Steifigkeit des Bohrschaftes gegenüber einem längsnahtgeschweißten oder rohrförmigen Bohrschaft der gleichen Wandstärke erhöht. Alternativ können Bandmaterialien mit geringeren Wandstärken eingesetzt werden, die beim fertigen Bohrschaft die gleiche Steifigkeit wie ein längsnahtgeschweißter oder rohrförmiger Bohrschaft aufweisen. Damit erhöht die Verwendung eines geschweißten Spiralrohrs als Bohrschaft entweder die Steifigkeit des Bohrschaftes im Bohrbetrieb und/oder reduziert das Gewicht des Bohrschaftes. Ein Bohrschaft mit einer höheren Steifigkeit verbessert die Stabilität des Bohrschaftes beim Bohren.

Die erfindungsgemäße Bohrkrone weist einen Bohrschaftabschnitt mit dem spiralrohrförmigen Bohrschaft, einen Aufnahmeabschnitt mit einem Deckel und einem Einsteckende und eine Verbindungseinrichtung, die den Bohrschaftabschnitt und Aufnahmeabschnitt lösbar oder unlösbar miteinander verbindet, auf. Die Verbindungseinrichtung ist als lösbare oder unlösbare Verbindungseinrichtung ausgebildet. Eine Verbindungseinrichtung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindungseinrichtung wird als unlösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. Die Bohrkrone ist als feste Bohrkrone und als Bohrkrone, die mit separaten Schneidabschnitten kombiniert werden kann, ausgebildet. Die feste Bohrkrone weist ein oder mehrere Schneidsegmente auf, die mit dem Bohrschaft unlösbar verbunden sind, wobei die Schneidsegmente am Bohrschaft verschweißt, verlötet, verklebt oder in einer anderen geeigneten Befestigungsart am Bohrschaft befestigt sind. Bei einer Bohrkrone, die mit einem separaten Schneidabschnitt kombiniert wird, wird der Schneidabschnitt über eine lösbare Verbindungseinrichtung mit der Bohrkrone verbunden, wobei der Schneidabschnitt einen Ringabschnitt und ein oder mehrere Schneidsegmente, die am Ringabschnitt befestigt sind, umfasst.

Bevorzugt ist der rohrförmige Bohrschaft aus N, N ≥ 1 Bandmaterialen geformt, wobei die Bandkanten der Bandmaterialen über N, N ≥ 1 spiralförmige Verbindungsschweißnähte stoffschlüssig verbunden sind. Der Bohrschaft wird aus einem Bandmaterial (N = 1) oder mehreren Bandmaterialien (N ≥ 2) hergestellt, wobei die Anzahl der verwendeten Bandmaterialen der Anzahl der spiralförmigen Verbindungsschweißnähte entspricht. Bei der Herstellung der spiralrohrförmigen Bohrschäfte werden die Bandmaterialien in einer Formanlage spiralförmig mit gleichbleibendem Krümmungsradius kontinuierlich zu Spiralrohren geformt und in einer Schweißanlage an den Bandkanten verschweißt. Bei der Spiralrohrherstellung sind Verfahren in gemeinsamen Form- und Schweißanlagen und Verfahren in getrennten Form- und Schweißanlagen bekannt.

In einer ersten Variante sind die N, N ≥ 1 Bandmaterialen als ebene Bleche mit einer konstanten Blechdicke ausgebildet. Der spiralrohrförmige Bohrschaft wird aus ebenen Blechen hergestellt, die eine konstante Blechdicke und eine konstante Breite aufweisen. Die ebenen Bleche werden zu einem Spiralrohr geformt und an den Bandkanten über spiralförmige Verbindungsschweißnähte miteinander stoffschlüssig verbunden. Das geformte Bandmaterial weist eine konstante Wandstärke auf, die der Blechdicke der ebenen Bleche entspricht. Die Geometrie der spiralförmigen Verbindungsschweißnähte kann durch die Prozessführung beim Schweißen beeinflusst werden. Durch die Zuführung eines Nahtmaterials können spiralförmige Verbindungsschweißnähte erzeugt werden, die an der Innenseite des Bohrschaftes, der Außenseite des Bohrschaftes oder an der Innen- und Außenseite des Bohrschaftes gegenüber dem geformten Bandmaterial überstehen.

In einer zweiten Variante sind die N, N ≥ 1 Bandmaterialen als ebene Bleche mit mindestens einer Vertiefung ausgebildet. Die Vertiefungen werden vor dem Umformen des Bandmaterials zum Spiralrohr im Blech erzeugt und dienen beim Nassbohren als Transportkanal für die notwendige Kühl- und Spülflüssigkeit. Beim Nassbohren mit einer Bohrkrone ist eine Kühlund Spülflüssigkeit erforderlich, die als Kühlflüssigkeit die Schneidsegmente kühlt und als Spülflüssigkeit Bohrklein aus dem Bohrloch abtransportiert. Die Anzahl der Vertiefungen, die Geometrie der Vertiefungen und die Anordnung der Vertiefungen auf der Innen- und/oder Außenseite des Bohrschaftes können an die Flüssigkeitsmenge der Kühl- und Spülflüssigkeit angepasst werden. Die an der Innenseite des Bohrschaftes vorgesehenen Vertiefungen dienen zur Zuführung von sauberer Kühl- und Spülflüssigkeit und die an der Außenseite des Bohrschaftes vorgesehenen Vertiefungen zur Abführung von mit Bohrklein versetzter, verbrauchter Kühl- und Spülflüssigkeit. Da die Vertiefungen bei der erfindungsgemäßen Bohrkrone vor dem Umformen des Bandmaterials erzeugt werden, können an der Innenseite des Bohrschaftes mit geringem Fertigungsaufwand Vertiefungen hergestellt werden. Bei bekannten Bohrschäften ist die Anordnung von Transportkanälen auf die Außenseite des Bohrschaftes beschränkt, da bei einem rohrförmigen Bohrschaft nur mit großem Fertigungsaufwand an der Innenseite des Bohrschaftes Vertiefungen hergestellt werden können.

In einer dritten Variante sind die N, N ≥ 1 Bandmaterialen als Profilbleche mit einem Profilquerschnitt ausgebildet, wobei die Profilbleche eine Blechdicke und eine Profilhöhe aufweisen. Der spiralrohrförmige Bohrschaft wird aus plattenförmigen Profilblechen hergestellt. Als Längsrichtung der plattenförmigen Profilbleche ist die Verlaufsrichtung des Profilquerschnitts definiert. Plattenförmige Profilbleche stehen kostengünstig in großer Anzahl mit unterschiedlichen Profilquerschnitten zur Verfügung und ermöglichen eine kostengünstige Herstellung von Bohrschäften für Bohrkronen. Durch den Profilquerschnitt entstehen an der Innen- und Außenseite des Bohrschaftes Vertiefungen, über die die Kühl- und Spülflüssigkeit transportiert werden kann. Die an der Innenseite des Bohrschaftes vorgesehenen Vertiefungen dienen zur Zuführung von sauberer Kühl- und Spülflüssigkeit und die an der Außenseite des Bohrschaftes vorgesehenen Vertiefungen zur Abführung von mit Bohrklein versetzter, verbrauchter Kühl- und Spülflüssigkeit. Die Geometrie des Profilblechs kann an die benötige Flüssigkeitsmenge der Kühl- und Spülflüssigkeit angepasst werden.

In einer bevorzugten Weiterentwicklung der Bohrkrone steht mindestens eine spiralförmige Verbindungsschweißnaht des Bohrschaftes gegenüber dem geformten Bandmaterial des Spiralrohrs über, wobei die mindestens eine überstehende spiralförmige Verbindungsschweißnaht ein Nahtmaterial enthält. Eine gegenüber dem geformten Bandmaterial des Spiralrohrs überstehende spiralförmige Verbindungsschweißnaht verbessert die Führung des Bohrschaftes beim Bohren. Der Überstand der spiralförmigen Verbindungsschweißnaht wird so eingestellt, dass die spiralförmige Verbindungsschweißnaht an der Außenseite des Bohrschaftes mit dem Bohrloch und/oder an der Innenseite des Bohrschaftes mit dem Bohrkern in Kontakt steht. Durch die überstehende spiralförmige Verbindungsschweißnaht weist der Bohrschaft eine geringe Kontaktfläche zum Bohrkern und zum Bohrloch auf und erzeugt eine geringe Reibung. Je geringer die Reibung an der Innenseite zwischen Bohrschaft und Bohrkern bzw. an der Außenseite zwischen Bohrschaft und Bohrloch ist, umso grösser ist der Bohrfortschritt der Bohrkrone bei gleicher Leistung des Kernbohrgerätes und die Lebensdauer des Bohrschaftes ist erhöht. Die spiralförmige Verbindungsschweißnaht kann an einer Innenseite des Bohrschaftes, an einer Außenseite des Bohrschaftes oder an einer Innenund Außenseite des Bohrschaftes gegenüber dem geformten Bandmaterial des Spiralrohrs überstehen. Um einen Überstand der spiralförmigen Verbindungsschweißnaht zu erzeugen, ist ein Nahtmaterial erforderlich. Das Nahtmaterial kann drahtförmig, bandförmig oder pulverförmig ausgebildet sein.

Neben einer verbesserten Führung des Bohrschaftes beim Nass- und Trockenbohren kann eine gegenüber dem geformten Bandmaterial des Spiralrohrs überstehende spiralförmige Verbindungsschweißnaht beim Nassbohren den Transport der Kühl- und Spülflüssigkeit verbessern. Dabei wirkt die überstehende spiralförmige Verbindungsschweißnaht für die Kühlund Spülflüssigkeit als Förderwendel. Dabei ist zu beachten, dass die überstehende spiralförmige Verbindungsschweißnaht den Flüssigkeitstransport an der Innenseite oder der Außenseite des Bohrschaftes verbessern kann. An der Innenseite des Bohrschaftes wird saubere Kühl- und Spülflüssigkeit zur Bearbeitungsstelle transportiert und an der Außenseite des Bohrschaftes wird mit Bohrklein versetzte, verbrauchte Kühl- und Spülflüssigkeit abtransportiert. Die spiralförmige Verbindungsschweißnaht wirkt als Förderwendel für die saubere Kühl- und Spülflüssigkeit, wenn die Drehrichtung der Bohrkrone und die Verlaufsrichtung der spiralförmigen Verbindungsschweißnaht an der Innenseite des Bohrschaftes übereinstimmen, und die spiralförmige Verbindungsschweißnaht wirkt als Förderwendel für die mit Bohrklein versetzte, verbrauchte Kühl- und Spülflüssigkeit, wenn die Drehrichtung der Bohrkrone und die Verlaufsrichtung der spiralförmigen Verbindungsschweißnaht an der Außenseite des Bohrschaftes übereinstimmen.

In einer bevorzugten Variante weisen das Nahtmaterial und die N, N ≥ 1 Bandmaterialen die gleichen Materialeigenschaften auf. Wenn das Nahtmaterial und die Bandmaterialien die gleichen Materialeigenschaften aufweisen, entsteht beim Schweißen der Bandkanten ein gleichmäßiger Übergang und das Nahtmaterial kann sich gut mit dem Bandmaterial verbinden.

In einer alternativen bevorzugten Variante weisen das Nahtmaterial und die N, N ≥ 1 Bandmaterialen unterschiedliche Materialeigenschaften auf, wobei das Nahtmaterial eine höhere Zugfestigkeit, eine höhere Verschleißbeständigkeit oder eine höhere Zugfestigkeit und Verschleißbeständigkeit als die Bandmaterialien aufweist. Bei einer spiralförmigen Verbindungsschweißnaht, die gegenüber dem geformten Bandmaterial übersteht, soll die Verbindungsschweißnaht während des Bohrbetriebs eine Führung des Bohrschaftes ermöglichen. Je kleiner der Spalt zwischen der spiralförmigen Verbindungsschweißnaht und dem Bohrkern an der Innenseite des Bohrschaftes bzw. zwischen der spiralförmigen Verbindungsschweißnaht und dem Bohrloch an der Außenseite ist, umso besser wird der Bohrschaft geführt. Durch Reibung zwischen der spiralförmigen Verbindungsschweißnaht und dem Bohrkern an der Innenseite bzw. zwischen der spiralförmigen Verbindungsschweißnaht und dem Bohrloch an der Außenseite kann die spiralförmige Verbindungsschweißnaht abgetragen werden, wodurch sich die Führung des Bohrschaftes verschlechtert. Durch den Einsatz von Nahtmaterial, das eine höhere Zugfestigkeit, eine höhere Verschleißbeständigkeit oder eine höhere Zugfestigkeit und Verschleißbeständigkeit als die Bandmaterialien aufweist, können die Eigenschaften der spiralförmigen Verbindungsschweißnaht beeinflusst werden, so dass die Führung des Bohrschaftes über die spiralförmige Verbindungsschweißnaht möglichst während der gesamten Lebensdauer des Bohrschaftes gewährleistet ist.

In einer ersten bevorzugten Variante steht die mindestens eine überstehende spiralförmige Verbindungsschweißnaht an einer Innenseite des Bohrschaftes mit einem Innenüberstand Δ_{I} gegenüber dem geformten Bandmaterial des Spiralrohrs über. Eine an der Innenseite des Bohrschaftes überstehende spiralförmige Verbindungsschweißnaht ermöglicht beim Bohren mit der Bohrkrone eine Führung des Bohrschaftes über den Bohrkern. Der Innenüberstand der spiralförmigen Verbindungsschweißnaht wird so eingestellt, dass die spiralförmige Verbindungsschweißnaht nach dem Anbohren der Bohrkrone an der Innenseite des Bohrschaftes mit dem Bohrkern in Kontakt steht. Außerdem kann eine an der Innenseite des Bohrschaftes überstehende spiralförmige Verbindungsschweißnaht beim Nassbohren mit der Bohrkrone den Transport der sauberen Kühl- und Spülflüssigkeit an die Bearbeitungsstelle unterstützen. Die spiralförmige Verbindungsschweißnaht wirkt als Förderwendel für die saubere Kühl- und Spülflüssigkeit, wenn die Drehrichtung der Bohrkrone und die Verlaufsrichtung der spiralförmigen Verbindungsschweißnaht an der Innenseite des Bohrschaftes übereinstimmen.

In einer zweiten bevorzugten Variante steht die mindestens eine überstehende spiralförmige Verbindungsschweißnaht an einer Außenseite des Bohrschaftes mit einem Außenüberstand Δ_{A} gegenüber dem geformten Bandmaterial des Spiralrohrs über. Eine an der Außenseite des Bohrschaftes überstehende spiralförmige Verbindungsschweißnaht ermöglicht beim Bohren mit der Bohrkrone eine Führung des Bohrschaftes über das Bohrloch. Der Außenüberstand der spiralförmigen Verbindungsschweißnaht wird so eingestellt, dass die spiralförmige Verbindungsschweißnaht nach dem Anbohren der Bohrkrone an der Außenseite des Bohrschaftes mit dem Bohrloch in Kontakt steht. Außerdem kann eine an der Außenseite des Bohrschaftes überstehende spiralförmige Verbindungsschweißnaht beim Nassbohren mit der Bohrkrone den Abtransport der mit Bohrklein versetzten, verbrauchten Kühl- und Spülflüssigkeit unterstützen. Die spiralförmige Verbindungsschweißnaht wirkt als Förderwendel für die mit Bohrklein versetzte, verbrauchte Kühl- und Spülflüssigkeit, wenn die Drehrichtung der Bohrkrone und die Verlaufsrichtung der spiralförmigen Verbindungsschweißnaht an der Außenseite des Bohrschaftes übereinstimmen.

In einer dritten bevorzugten Variante steht die mindestens eine spiralförmige Verbindungsschweißnaht an einer Innenseite des Bohrschaftes mit einem Innenüberstand Δ_{I} und an einer Außenseite des Bohrschaftes mit einem Außenüberstand Δ_{A} gegenüber dem geformten Bandmaterial des Spiralrohrs über. Eine an der Innen- und Außenseite des Bohrschaftes überstehende spiralförmige Verbindungsschweißnaht ermöglicht beim Bohren mit der Bohrkrone eine Führung des Bohrschaftes sowohl an der Innenseite des Bohrschaftes über den Bohrkern als auch an der Außenseite des Bohrschaftes über das Bohrloch. Die an der Innenund Außenseite des Bohrschaftes überstehende spiralförmige Verbindungsschweißnaht wirkt beim Nassbohren an der Innenseite oder der Außenseite des Bohrschaftes als Förderwendel für die Kühl- und Spülflüssigkeit. Die Verlaufsrichtung der spiralförmigen Verbindungsschweißnaht legt fest, ob die spiralförmige Verbindungsschweißnaht den Flüssigkeitstransport an der Innen- oder Außenseite des Bohrschaftes unterstützt. Wenn die Verlaufsrichtung der spiralförmigen Verbindungsschweißnaht und die Drehrichtung der Bohrkrone an der Innenseite des Bohrschaftes übereinstimmen, unterstützt die spiralförmige Verbindungsschweißnaht den Flüssigkeitstransport an der Innenseite des Bohrschaftes. Wenn die Verlaufsrichtung der spiralförmigen Verbindungsschweißnaht und die Drehrichtung der Bohrkrone an der Außenseite des Bohrschaftes übereinstimmen, unterstützt die spiralförmige Verbindungsschweißnaht den Flüssigkeitstransport an der Außenseite des Bohrschaftes.

Erfindungsgemäß ist das Verfahren zur Herstellung eines Bohrschaftes für eine Bohrkrone nach einem der Ansprüche 1 bis 12, dadurch gekennzeichnet, dass die N, N ≥ 1 Bandmaterialien zu einem Spiralrohr geformt und an den Bandkanten über N, N ≥ 1 spiralförmige Verbindungsschweißnähte stoffschlüssig verbunden werden. Das erfindungsgemäße Verfahren ermöglicht eine kostengünstige Herstellung eines spiralrohrförmigen Bohrschaftes für eine Bohrkrone. Die Bandmaterialien werden in einer Formanlage schraubenlinienförmig mit gleichbleibendem Krümmungsradius kontinuierlich zu Spiralrohren geformt und in einer Schweißanlage an den Bandkanten verschweißt.

In einer bevorzugten Weiterentwicklung des Verfahrens wird beim Verbinden der zusammenstoßenden Bandkanten der N, N ≥ 1 Bandmaterialien über die N, N ≥ 1 spiralförmigen Verbindungsschweißnähte ein Nahtmaterial verwendet. Das Nahtmaterial ist beispielsweise drahtförmig, bandförmig oder pulverförmig ausgebildet und erzeugt eine gegenüber dem geformten Bandmaterial überstehende spiralförmige Verbindungsschweißnaht. Durch den Einsatz von Nahtmaterial beim stoffschlüssigen Verbinden der zusammenstoßenden Bandkanten können spiralförmige Verbindungsschweißnähte erzeugt werden, die gegenüber dem geformten Bandmaterial überstehen. Die überstehenden spiralförmigen Verbindungsschweißnähte führen den Bohrschaft beim Bohren an der Innenseite des Bohrschaftes über den Bohrkern und/oder an der Außenseite des Bohrschaftes über das Bohrloch. Die Geometrie der spiralförmigen Verbindungsschweißnähte kann über die Prozessführung beim Schweißen beeinflusst werden. Das Nahtmaterial kann der Innenseite des Bohrschaftes, der Außenseite des Bohrschaftes oder der Innen- und Außenseite des Bohrschaftes zugeführt werden.

In einer besonders bevorzugten Variante des Verfahrens weist das Nahtmaterial eine höhere Zugfestigkeit, eine höhere Verschleißbeständigkeit oder eine höhere Zugfestigkeit und Verschleißbeständigkeit als die N, N ≥ 1 Bandmaterialien auf. Durch den Einsatz von Nahtmaterial, das eine höhere Zugfestigkeit, eine höhere Verschleißbeständigkeit oder eine höhere Zugfestigkeit und Verschleißbeständigkeit als die Bandmaterialien aufweist, können die Eigenschaften der spiralförmigen Verbindungsschweißnaht beeinflusst werden, so dass die Führung des Bohrschaftes über die spiralförmige Verbindungsschweißnaht möglichst während der gesamten Lebensdauer des Bohrschaftes gewährleistet ist.

In einer alternativen besonders bevorzugten Variante des Verfahrens wird beim Verbinden der zusammenstoßenden Bandkanten der N, N ≥ 1 Bandmaterialien über die spiralförmigen Verbindungsschweißnähte ein erstes Nahtmaterial und ein zweites Nahtmaterial verwendet, wobei die Materialeigenschaften des ersten Nahtmaterials von den Materialeigenschaften des zweiten Nahtmaterials verschieden sind. Über die Materialeigenschaften des verwendeten Nahtmaterials lassen sich die Eigenschaften der spiralförmigen Verbindungsschweißnähte beeinflussen. Das erste Nahtmaterial kann beispielsweise die gleichen Materialeigenschaften wie die Bandmaterialien aufweisen, so dass beim Schweißen ein gleichmäßiger Übergang zwischen den Bandkanten entsteht und sich das erste Nahtmaterial gut mit dem Bandmaterial verbinden kann. Das zweite Nahtmaterial kann beispielsweise eine höhere Zugfestigkeit, eine höhere Verschleißbeständigkeit oder eine höhere Zugfestigkeit und Verschleißbeständigkeit als die Bandmaterialien aufweisen und die Eigenschaften der spiralförmigen Verbindungsschweißnähte verbessern.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine erste Ausführungsform einer erfindungsgemäßen Bohrkrone mit einem spiralrohrförmigen Bohrschaft, wobei die Bohrkrone mit einem separaten Schneidabschnitt verbindbar ist;
- FIGN. 2A, B: einen Längsschnitt durch die Bohrkrone der FIG. 1 entlang der Schnittlinie A-A in FIG. 1B (FIG. 2A) sowie ein Detail des Bohrschaftes der FIG. 2A in einer vergrößerten Darstellung (FIG. 2B);
- FIG. 3: eine zweite Ausführungsform einer erfindungsgemäßen Bohrkrone mit einem spiralrohrförmigen Bohrschaft, der mit mehreren Schneidsegmenten verbunden ist und an einer Innenseite drei Vertiefungen aufweist;
- FIGN. 4A, B: einen Längsschnitt durch die Bohrkrone der FIG. 3 entlang der Schnittlinie A-A in FIG. 3 (FIG. 4A) sowie ein Detail des Bohrschaftes der FIG. 4A in einer vergrößerten Darstellung (FIG. 4B);
- FIG. 5: eine dritte Ausführungsform einer erfindungsgemäßen Bohrkrone mit einem spiralrohrförmigen Bohrschaft, der mit mehreren Schneidsegmenten verbunden ist und aus einem Profilblech gefertigt wurde; und
- FIGN. 6A, B: einen Längsschnitt durch die Bohrkrone der FIG. 5 entlang der Schnittlinie A-A in FIG. 5 (FIG. 6A) sowie ein Detail des Bohrschaftes der FIG. 6A in einer vergrößerten Darstellung (FIG. 6B).

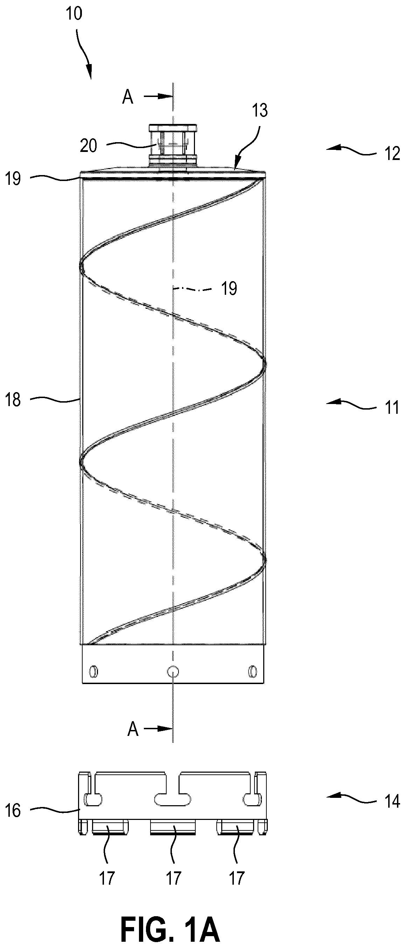

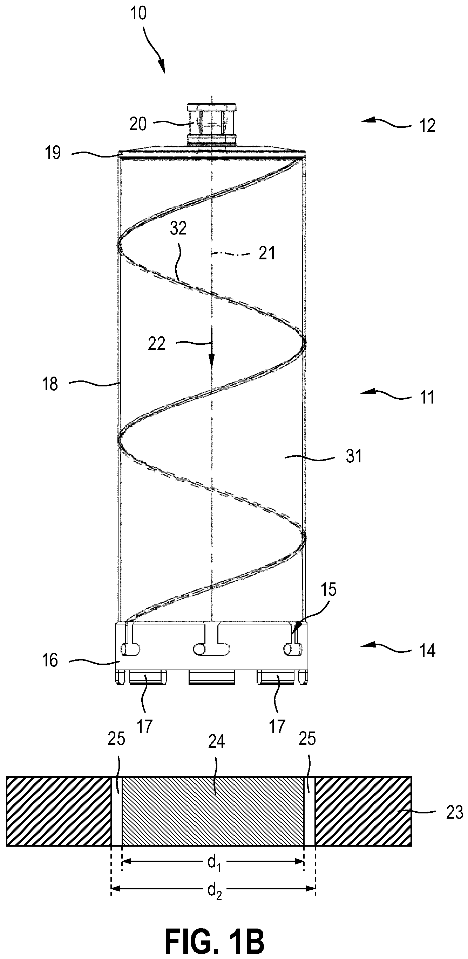

**FIGN. 1A****, B** zeigen eine erste Ausführungsform einer erfindungsgemäßen Bohrkrone **10,** die im Folgenden als erste Bohrkrone 10 bezeichnet wird. Die erste Bohrkrone 10 umfasst einen Bohrschaftabschnitt **11,** einen Aufnahmeabschnitt **12** und eine Verbindungseinrichtung **13,** die den Bohrschaftabschnitt 11 unlösbar mit dem Aufnahmeabschnitt 12 verbindet. Die erste Bohrkrone 10 ist mit einem separaten Schneidabschnitt **14** über eine weitere lösbare Verbindungseinrichtung **15** verbindbar. FIG. 1A zeigt die erste Bohrkrone 10 und den Schneidabschnitt 14 im nicht-verbundenen Zustand und FIG. 1B die erste Bohrkrone 10 und den Schneidabschnitt 14 im verbundenen Zustand.

Der Schneidabschnitt 11 umfasst einen Ringabschnitt **16** und mehrere Schneidsegmente **17,** die mit dem Ringabschnitt 16 verbunden sind. Die Schneidsegmente 17 werden ringförmig angeordnet und bilden einen Schneidring mit Zwischenräumen. Der Schneidabschnitt 14 kann anstatt mehrerer Schneidsegmente 17 auch ein einzelnes als geschlossener Schneidring ausgebildetes Schneidsegment aufweisen. Die Schneidsegmente 17 sind mit dem Ringabschnitt 16 verschweißt, verlötet, verklebt oder in einer anderen geeigneten Befestigungsart am Ringabschnitt 16 befestigt. Der Bohrschaftabschnitt 11 umfasst einen spiralrohrförmigen Bohrschaft **18** und der Aufnahmeabschnitt 12 umfasst einen Deckel **19** und ein Einsteckende **20,** über das die erste Bohrkrone 10 in einer Werkzeugaufnahme eines Kernbohrgerätes befestigt wird. Im Bohrbetrieb wird die erste Bohrkrone 10 vom Kernbohrgerät um eine Bohrachse **21** angetrieben und in einer Bohrrichtung **22** parallel zur Bohrachse 21 in ein zu bearbeitendes Werkstück **23** bewegt. Die erste Bohrkrone 10 erzeugt im Werkstück 23 einen Bohrkern **24** mit einem Kerndurchmesser **d₁** und ein Bohrloch **25** mit einem Bohrlochdurchmesser **d₂.**

Der Bohrschaft 18 ist als geschweißtes Spiralrohr ausgebildet, das aus einem Bandmaterial **31** in Form eines ebenen Blechs durch Formen und Schweißen gefertigt wurde. Das ebene Bandmaterial 31 wurde zu einem Spiralrohr geformt und an den zusammenstoßenden Bandkanten über eine spiralförmige Verbindungsschweißnaht **32** verbunden. Die spiralförmige Verbindungsschweißnaht 32 wirkt für den Bohrschaft 18 als Versteifungselement und erhöht die Steifigkeit des Bohrschaftes 18 gegenüber einem längsnahtgeschweißten oder rohrförmigen Bohrschaft der gleichen Wandstärke.

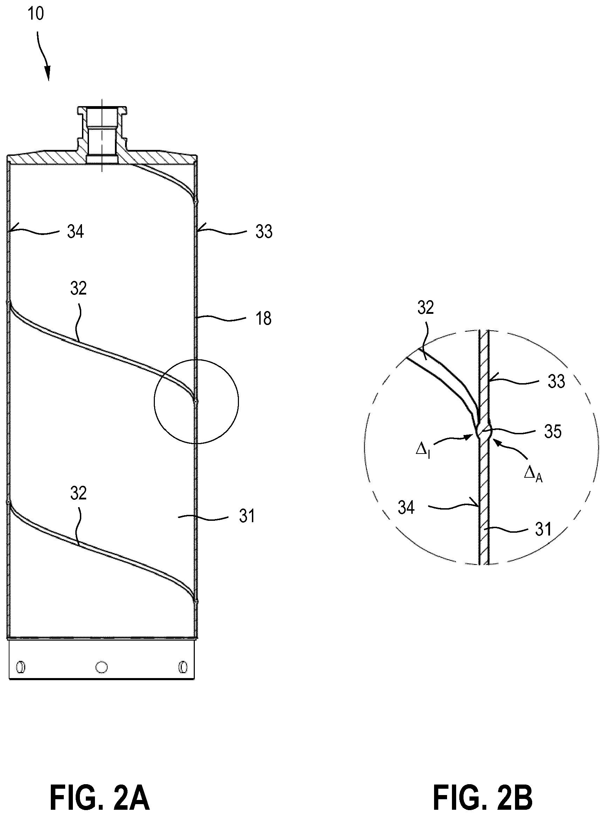

**FIGN. 2A****, B** zeigt einen Längsschnitt durch die erste Bohrkrone 10 der FIG. 1 entlang der Schnittlinie A-A in FIG. 1B (FIG. 2A) sowie ein Detail des Bohrschaftes 16 der FIG. 2A in einer vergrößerten Darstellung (FIG. 2B).

Die spiralförmige Verbindungsschweißnaht 32 steht gegenüber dem geformten Bandmaterial 31 an einer Außenseite **33** und einer Innenseite **34** des Bohrschaftes 16 über. Der Überstand der spiralförmigen Verbindungsschweißnaht 32 an der Außenseite 33 des Bohrschaftes 16 wird als Außenüberstand Δ_{A} und der Überstand der spiralförmigen Verbindungsschweißnaht 32 an der Innenseite 34 des Bohrschaftes 16 als Innenüberstand Δ_{I} bezeichnet. Um die gegenüber dem geformten Bandmaterial 31 an der Außen- und Innenseite 33, 34 überstehende spiralförmige Verbindungsschweißnaht 32 zu erzeugen, wird beim Schweißen des geformten Bandmaterials 31 ein Nahtmaterial **35** verwendet, das das benötigte Materialvolumen zur Verfügung stellt. Das Nahtmaterial 35 kann pulverförmig, drahtförmig oder bandförmig ausgebildet sein. Außerdem können die Materialeigenschaften des Nahtmaterials 35 an gewünschte Eigenschaften der spiralförmigen Verbindungsschweißnaht 32 angepasst werden.

Die spiralförmige Verbindungsschweißnaht 32 verbessert beim Bohren mit der ersten Bohrkrone 10 die Führung des Bohrschaftes 18. Je kleiner der Spalt zwischen der spiralförmigen Verbindungsschweißnaht 32 und dem Bohrloch 25 an der Außenseite 33 bzw. zwischen der spiralförmigen Verbindungsschweißnaht 32 und dem Bohrkern 23 an der Innenseite 34 ist, umso besser wird der Bohrschaft 18 geführt. Durch Reibung zwischen der spiralförmigen Verbindungsschweißnaht 32 und dem Bohrloch 25 an der Außenseite 33 bzw. zwischen der spiralförmigen Verbindungsschweißnaht 32 und dem Bohrkern 24 an der Innenseite 34 kann die spiralförmige Verbindungsschweißnaht 32 abgetragen werden, wodurch sich die Führung des Bohrschaftes 18 verschlechtert. Durch den Einsatz von Nahtmaterial 35, das eine höhere Zugfestigkeit und Verschleißbeständigkeit als das Bandmaterial 31 aufweist, können die Eigenschaften der spiralförmigen Verbindungsschweißnaht 32 beeinflusst werden, so dass die Führung des Bohrschaftes 18 über die spiralförmige Verbindungsschweißnaht 32 möglichst während der gesamten Lebensdauer des Bohrschaftes 18 gewährleistet ist.

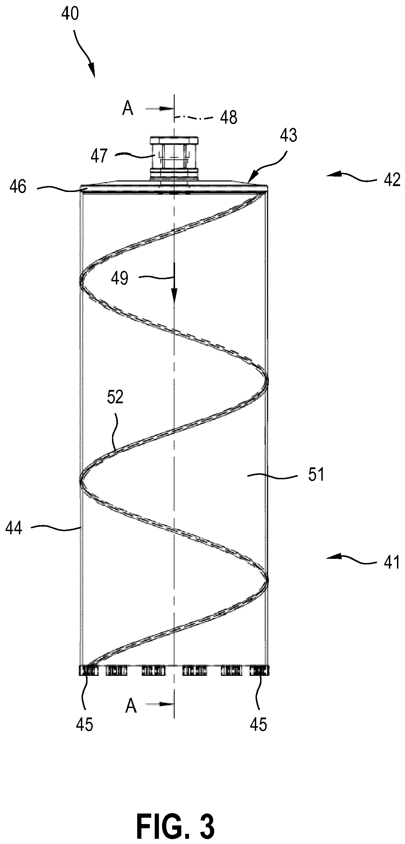

**FIG. 3** zeigt eine zweite Ausführungsform einer erfindungsgemäßen Bohrkrone **40,** die im Folgenden als zweite Bohrkrone 40 bezeichnet wird. Die zweite Bohrkrone 40 umfasst einen Bohrschaftabschnitt **41,** einen Aufnahmeabschnitt **42** und eine Verbindungseinrichtung **43,** die den Bohrschaftabschnitt 41 unlösbar mit dem Aufnahmeabschnitt 42 verbindet.

Der Bohrschaftabschnitt 41 umfasst einen spiralrohrförmigen Bohrschaft **44** und mehrere Schneidsegmente **45,** die mit dem Bohrschaft 44 verschweißt, verlötet, verklebt oder in einer anderen geeigneten Befestigungsart am Bohrschaft 44 befestigt sind. Der Aufnahmeabschnitt 42 umfasst einen Deckel **46** und ein Einsteckende **47,** über das die dritte Bohrkrone 40 in einer Werkzeugaufnahme eines Kernbohrgerätes befestigt wird. Im Bohrbetrieb wird die zweite Bohrkrone 40 vom Kernbohrgerät um eine Bohrachse **48** angetrieben und in einer Bohrrichtung **49** parallel zur Bohrachse 48 in das zu bearbeitende Werkstück 23 bewegt.

Die zweite Bohrkrone 40 weist mehrere Schneidsegmente 45 auf, die am Bohrschaft 44 unlösbar befestigt sind. Die zweite Bohrkrone 40 kann anstatt mehrerer Schneidsegmente 45 auch ein einzelnes als geschlossener Schneidring ausgebildetes Schneidsegment aufweisen. Die Schneidsegmente 45 werden am Bohrschaft 44 verschweißt, verlötet, verklebt oder in einer anderen geeigneten Befestigungsart am Bohrschaft 44 befestigt.

Der Bohrschaft 44 ist spiralrohrförmig in Form eines geschweißten Spiralrohrs ausgebildet, das aus einem Bandmaterial **51** in Form eines ebenen Blechs mit Vertiefungen durch Formen und Schweißen gefertigt wurde. Das Bandmaterial 51 wurde zu einem Spiralrohr geformt und an den zusammenstoßenden Bandkanten über eine spiralförmige Verbindungsschweißnaht **52** verbunden.

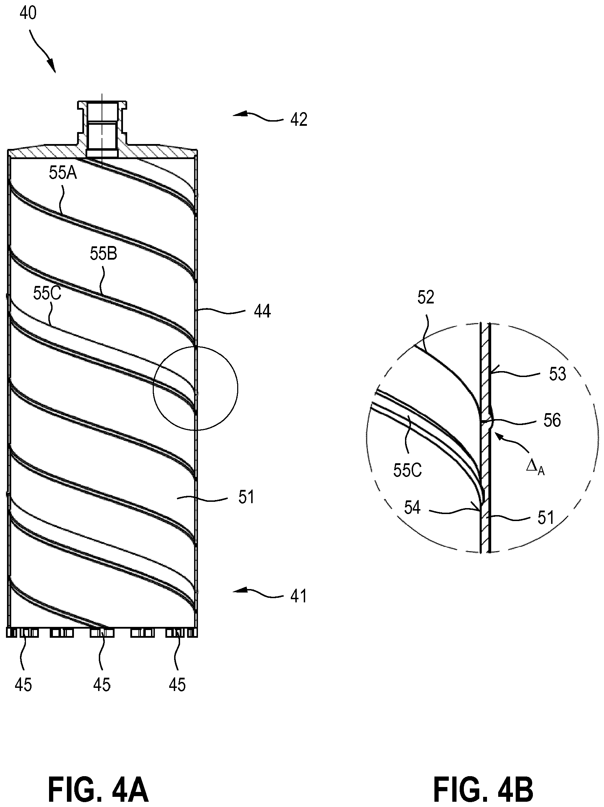

**FIGN. 4A****, B** zeigen einen Längsschnitt durch die zweite Bohrkrone 40 der FIG. 3 entlang der Schnittlinie A-A in FIG. 3 (FIG. 4A) sowie ein Detail des Bohrschaftes 46 der FIG. 4A in einer vergrößerten Darstellung (FIG. 4B).

Die spiralförmige Verbindungsschweißnaht 52 des Bohrschaftes 44 steht an einer Außenseite **53** des Bohrschaftes 44 mit einem Außenüberstand Δ_{A} gegenüber dem geformten Bandmaterial 51 über und ist an einer Innenseite **54** des Bohrschaftes 44 im Wesentlichen bündig mit dem geformten Bandmaterial 51 ausgebildet. Um die an der Außenseite 53 überstehende spiralförmige Verbindungsschweißnaht 52 zu erzeugen, wird beim Schweißen des geformten Bandmaterials 51 ein Nahtmaterial **55** verwendet, das das benötigte Materialvolumen zur Verfügung stellt.

Das Nahtmaterial 55 kann pulverförmig, drahtförmig oder bandförmig ausgebildet sein. Über die Materialeigenschaften des Nahtmaterials 55 können die Eigenschaften der spiralförmigen Verbindungsschweißnaht 52 angepasst werden. Das Nahtmaterial 55 kann die gleichen Materialeigenschaften oder unterschiedliche Materialeigenschaften wie das Bandmaterial 51 aufweisen. Wenn Nahtmaterial 55 und Bandmaterial 51 die gleichen Materialeigenschaften aufweisen, entsteht beim Schweißen der Bandkanten ein gleichmäßiger Übergang und das Nahtmaterial 55 kann sich gut mit dem Bandmaterial 51 verbinden. Durch den Einsatz eines Nahtmaterials 55, das eine höhere Zugfestigkeit und/oder Verschleißbeständigkeit als das Bandmaterial 51 aufweist, können die Eigenschaften der spiralförmigen Verbindungsschweißnaht 52 beeinflusst werden, so dass die Führung des Bohrschaftes 44 über die spiralförmige Verbindungsschweißnaht 52 möglichst während der gesamten Lebensdauer des Bohrschaftes 46 gewährleistet ist.

Die zweite Bohrkrone 40 zeigt einen spiralrohrförmigen Bohrschaft 44 mit einer spiralförmigen Verbindungsschweißnaht 52, die an der Außenseite 53 des Bohrschaftes 44 gegenüber dem geformten Bandmaterial 51 übersteht und an der Innenseite 54 des Bohrschaftes 44 im Wesentlichen bündig mit dem geformten Bandmaterial 51 ausgebildet ist. Alternativ kann die spiralförmige Verbindungsschweißnaht 52 an der Innenseite 54 des Bohrschaftes 44 mit einem Innenüberstand Δ_{I} gegenüber dem geformten Bandmaterial 51 überstehen und an der Außenseite 53 des Bohrschaftes 46 im Wesentlichen bündig mit dem geformten Bandmaterial 51 ausgebildet sein. Eine an der Innenseite 54 des Bohrschaftes 44 überstehende spiralförmige Verbindungsschweißnaht 52 ermöglicht beim Bohren mit der zweiten Bohrkrone 40 eine Führung des Bohrschaftes 44 über den Bohrkern 24. Außerdem kann die an der Innenseite 54 überstehende spiralförmige Verbindungsschweißnaht 52 beim Nassbohren die Zufuhr von sauberer Kühl- und Spülflüssigkeit unterstützen. Die spiralförmige Verbindungsschweißnaht 52 wirkt als Förderwendel für die saubere Kühl- und Spülflüssigkeit, wenn die Drehrichtung der zweiten Bohrkrone 40 und die Verlaufsrichtung der spiralförmigen Verbindungsschweißnaht 52 an der Innenseite 54 des Bohrschaftes 44 übereinstimmen.

Beim Nassbohren mit der zweiten Bohrkrone 40 ist eine Kühl- und Spülflüssigkeit erforderlich, die als Kühlflüssigkeit die Schneidsegmente 45 kühlt und als Spülflüssigkeit Bohrklein aus dem Bohrloch 25 abtransportiert. Die an der Außenseite 53 des Bohrschaftes 44 überstehende spiralförmige Verbindungsschweißnaht 52 kann neben der Führung des Bohrschaftes 44 über das Bohrloch 25 den Abtransport von mit Bohrklein versetzter, verbrauchter Kühl- und Spülflüssigkeit unterstützen. Die spiralförmige Verbindungsschweißnaht 52 wirkt als Förderwendel für die mit Bohrklein versetzte, verbrauchte Kühl- und Spülflüssigkeit, wenn die Drehrichtung der zweiten Bohrkrone 40 und die Verlaufsrichtung der spiralförmigen Verbindungsschweißnaht 52 an der Außenseite 53 des Bohrschaftes 44 übereinstimmen.

Um saubere Kühl- und Spülflüssigkeit der Innenseite 54 des Bohrschaftes 44 zuzuführen, sind an der Innenseite 54 des Bohrschaftes 44 drei Vertiefungen **56A, 56B, 56C** angeordnet, die als erste Vertiefung 56A, zweite Vertiefung 56B und dritte Vertiefung 56C bezeichnet werden. Die Vertiefungen 56A, 56B, 56C werden vor dem Umformen des Bandmaterials 51 zum Spiralrohr im Blech erzeugt und dienen beim Nassbohren mit der zweiten Bohrkrone 40 als Transportkanal für die notwendige Kühl- und Spülflüssigkeit. Die Vertiefungen 56A, 56B, 56C sind vor allem bei einem geringen Innenspalt zwischen dem Bohrkern und dem Bohrschaft notwendig. Die Anzahl der Vertiefungen 56A, 56B, 56C, die Geometrie der Vertiefungen 56A, 56B, 56C und die Anordnung der Vertiefungen 56A, 56B, 56C auf der Außenseite 53 und/oder Innenseite 54 des Bohrschaftes 44 können an die Flüssigkeitsmenge der Kühlund Spülflüssigkeit angepasst werden.

Die an der Innenseite 54 des Bohrschaftes 44 vorgesehenen Vertiefungen 56A, 56B, 56C dienen zur Zuführung von sauberer Kühl- und Spülflüssigkeit und an der Außenseite 53 des Bohrschaftes 44 vorgesehene Vertiefungen können den Abtransport von mit Bohrklein versetzter, verbrauchter Kühl- und Spülflüssigkeit unterstützen. Da die Vertiefungen 56A, 56B, 56C bei der zweiten Bohrkrone 40 vor dem Umformen des Bandmaterials 51 erzeugt werden, können an der Innenseite 54 des Bohrschaftes 44 mit geringem Fertigungsaufwand Vertiefungen hergestellt werden.

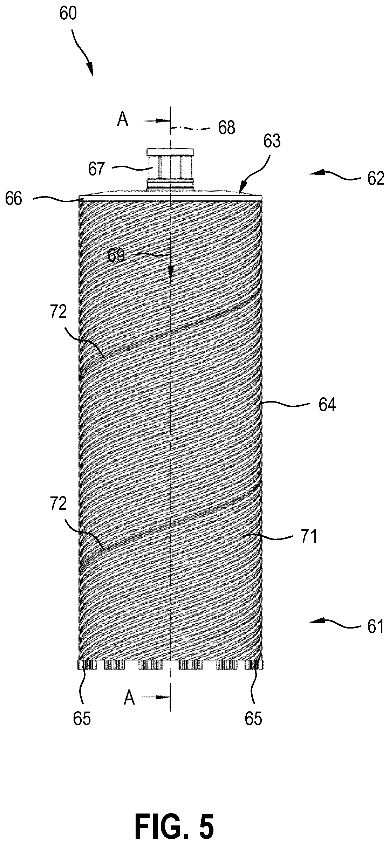

**FIG. 5** zeigt eine dritte Ausführungsform einer erfindungsgemäßen Bohrkrone **60,** die im Folgenden als dritte Bohrkrone 60 bezeichnet wird. Die dritte Bohrkrone 60 umfasst einen Bohrschaftabschnitt **61,** einen Aufnahmeabschnitt **62** und eine Verbindungseinrichtung **63,** die den Bohrschaftabschnitt 61 unlösbar mit dem Aufnahmeabschnitt 62 verbindet.

Der Bohrschaftabschnitt 61 umfasst einen spiralrohrförmigen Bohrschaft **64** und mehrere Schneidsegmente **65,** die mit dem Bohrschaft 64 verschweißt, verlötet, verklebt oder in einer anderen geeigneten Befestigungsart am Bohrschaft 64 befestigt sind. Der Aufnahmeabschnitt 62 umfasst einen Deckel **66** und ein Einsteckende **67,** über das die dritte Bohrkrone 60 in einer Werkzeugaufnahme eines Kernbohrgerätes befestigt wird. Im Bohrbetrieb wird die dritte Bohrkrone 60 vom Kernbohrgerät um eine Bohrachse **68** angetrieben und in einer Bohrrichtung **69** parallel zur Bohrachse 68 in das zu bearbeitende Werkstück 23 bewegt.

Die dritte Bohrkrone 60 weist mehrere Schneidsegmente 65 auf, die am Bohrschaft 64 unlösbar befestigt sind. Die dritte Bohrkrone 60 kann anstatt mehrerer Schneidsegmente 65 auch ein einzelnes als geschlossener Schneidring ausgebildetes Schneidsegment aufweisen. Die Schneidsegmente 65 werden am Bohrschaft 64 verschweißt, verlötet, verklebt oder in einer anderen geeigneten Befestigungsart am Bohrschaft 64 befestigt.

Der Bohrschaft 64 ist als geschweißtes Spiralrohr ausgebildet, das aus einem Bandmaterial **71** in Form eines wellenförmigen Profilblechs durch Formen und Schweißen gefertigt wurde. Das Bandmaterial 71 wurde zu einem Spiralrohr geformt und an den zusammenstoßenden Bandkanten über eine spiralförmige Verbindungsschweißnaht **72** verbunden. Die spiralförmige Verbindungsschweißnaht 72 wirkt für den Bohrschaft 64 als Versteifungselement.

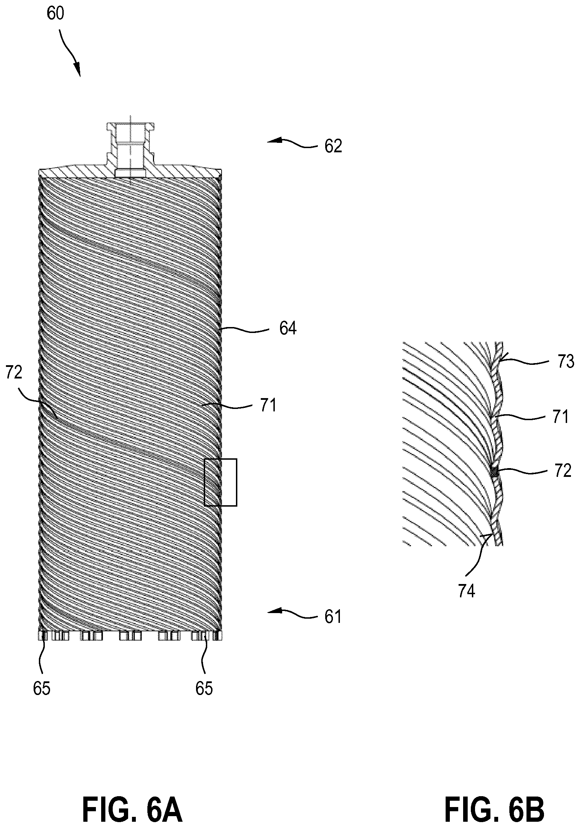

**FIGN. 6A****, B** zeigen einen Längsschnitt durch die dritte Bohrkrone 60 der FIG. 5 entlang der Schnittlinie A-A in FIG. 5 (FIG. 6A) sowie ein Detail des Bohrschaftes 64 der FIG. 6A in einer vergrößerten Darstellung (FIG. 6B).

Die spiralförmige Verbindungsschweißnaht 72 des Bohrschaftes 64 ist an einer Außenseite **73** des Bohrschaftes 64 und an einer Innenseite **74** des Bohrschaftes 64 im Wesentlichen bündig mit dem geformten Bandmaterial 71 ausgebildet. Durch den Profilquerschnitt des Bandmaterials 71 entstehen an der Außenseite 73 und der Innenseite 74 des Bohrschaftes 66 Vertiefungen, über die beim Nassbohren mit der dritten Bohrkrone 60 Kühl- und Spülflüssigkeit transportiert werden kann. Die an der Innenseite 74 des Bohrschaftes 64 vorgesehenen Vertiefungen dienen zur Zuführung von sauberer Kühl- und Spülflüssigkeit und die an der Außenseite 73 des Bohrschaftes 64 vorgesehenen Vertiefungen zur Abführung von mit Bohrklein versetzter, verbrauchter Kühl- und Spülflüssigkeit. Die Geometrie des Profilblechs kann an die zum Nassbohren benötige Flüssigkeitsmenge angepasst werden.

## Patentansprüche

1. Bohrkrone (10; 40; 60) zum Erstellen eines Bohrloches (25) mit einem Bohrlochdurchmesser (d₂) und einem Bohrkern (24) mit einem Kerndurchmesser (d₁) in einem Werkstück (23), aufweisend:
▪ einen Bohrschaftabschnitt (11; 41; 61) mit einem rohrförmigen Bohrschaft (18; 44; 64),
▪ einen Aufnahmeabschnitt (12; 42; 62) mit einem Deckel (19; 47; 67) und einem Einsteckende (20; 48; 68) und
▪ eine Verbindungseinrichtung (13; 43; 63), die den Bohrschaftabschnitt (12; 42; 62) und den Aufnahmeabschnitt (12; 42; 62) lösbar oder unlösbar miteinander verbindet,
**dadurch gekennzeichnet, dass** der rohrförmige Bohrschaft (18; 44; 64) als geschweißtes Spiralrohr ausgebildet ist.

2. Bohrkrone nach Anspruch 1, **dadurch gekennzeichnet, dass** der rohrförmige Bohrschaft (18; 44; 64) aus N, N ≥ 1 Bandmaterialen (31; 51; 71) geformt ist, wobei die Bandkanten der Bandmaterialen (31; 51; 71) über N, N ≥ 1 spiralförmige Verbindungsschweißnähte (32; 52; 72) stoffschlüssig verbunden sind.

3. Bohrkrone nach Anspruch 2, **dadurch gekennzeichnet, dass** die N, N ≥ 1 Bandmaterialen (31) als ebene Bleche mit einer konstanten Blechdicke ausgebildet sind.

4. Bohrkrone nach Anspruch 2, **dadurch gekennzeichnet, dass** die N, N ≥ 1 Bandmaterialen (51) als ebene Bleche mit mindestens einer Vertiefung (55A, 55B, 55C) ausgebildet sind.

5. Bohrkrone nach Anspruch 2, **dadurch gekennzeichnet, dass** die N, N ≥ 1 Bandmaterialen (71) als Profilbleche mit einem Profilquerschnitt ausgebildet sind, wobei die Profilbleche eine Blechdicke und eine Profilhöhe aufweisen.

6. Bohrkrone nach einem der Ansprüche 1 bis 5, **dadurch gekennzeichnet, dass** mindestens eine spiralförmige Verbindungsschweißnaht (32; 52) des Bohrschaftes (18; 44) gegenüber dem geformten Bandmaterial (31; 51) des Spiralrohrs übersteht, wobei die mindestens eine überstehende spiralförmige Verbindungsschweißnaht (32; 52) ein Nahtmaterial (35; 55) enthält.

7. Bohrkrone nach Anspruch 6, **dadurch gekennzeichnet, dass** das Nahtmaterial (35; 55) und die N, N ≥ 1 Bandmaterialen (31; 51) die gleichen Materialeigenschaften aufweisen.

8. Bohrkrone nach Anspruch 6, **dadurch gekennzeichnet, dass** das Nahtmaterial (35; 55) und die N, N ≥ 1 Bandmaterialen (31; 51) unterschiedliche Materialeigenschaften aufweisen.

9. Bohrkrone nach Anspruch 8, **dadurch gekennzeichnet, dass** das Nahtmaterial (35; 55) eine höhere Zugfestigkeit, eine höhere Verschleißbeständigkeit oder eine höhere Zugfestigkeit und Verschleißbeständigkeit als die Bandmaterialen (31; 51) aufweist.

10. Bohrkrone nach einem der Ansprüche 6 bis 9, **dadurch gekennzeichnet, dass** die mindestens eine überstehende spiralförmige Verbindungsschweißnaht (32; 52) an einer Innenseite (34; 54) des Bohrschaftes (18; 44) mit einem Innenüberstand (Δ_{I}) gegenüber dem geformten Bandmaterial (31; 51) des Spiralrohrs übersteht.

11. Bohrkrone nach einem der Ansprüche 6 bis 9, **dadurch gekennzeichnet, dass** die mindestens eine überstehende spiralförmige Verbindungsschweißnaht (32) an einer Außenseite (33) des Bohrschaftes (18) mit einem Außenüberstand (Δ_{A}) gegenüber dem geformten Bandmaterial (31) des Spiralrohrs übersteht.

12. Bohrkrone nach einem der Ansprüche 6 bis 9, **dadurch gekennzeichnet, dass** die mindestens eine überstehende spiralförmige Verbindungsschweißnaht (32) an einer Innenseite (34) des Bohrschaftes (18) mit einem Innenüberstand (Δ_{I}) und an einer Außenseite (33) des Bohrschaftes (18) mit einem Außenüberstand (Δ_{A}) gegenüber dem geformten Bandmaterial (31) des Spiralrohrs übersteht.

13. Verfahren zur Herstellung eines Bohrschaftes (18; 46; 66) für eine Bohrkrone (10; 40; 60) nach einem der Ansprüche 1 bis 12, bei dem N, N ≥ 1 Bandmaterialien (31; 51; 71) zu einem Spiralrohr geformt und an den zusammenstoßenden Bandkanten über N, N ≥ 1 spiralförmige Verbindungsschweißnähte (32; 52; 72) stoffschlüssig verbunden werden.

14. Verfahren nach Anspruch 13, **dadurch gekennzeichnet, dass** beim Verbinden der zusammenstoßenden Bandkanten der N, N ≥ 1 Bandmaterialien (31; 51) über die N, N ≥ 1 spiralförmigen Verbindungsschweißnähte (32; 52) ein Nahtmaterial (35; 55) verwendet wird.

15. Verfahren nach Anspruch 14, **dadurch gekennzeichnet, dass** das Nahtmaterial (35; 55) eine höhere Zugfestigkeit, eine höhere Verschleißbeständigkeit oder eine höhere Zugfestigkeit und Verschleißbeständigkeit als die Bandmaterialien (31; 51) aufweist.

16. Verfahren nach Anspruch 15, **dadurch gekennzeichnet, dass** beim Verbinden der zusammenstoßenden Bandkanten der N, N ≥ 1 Bandmaterialien (31; 51) über die spiralförmigen Verbindungsschweißnähte (32; 52) ein erstes Nahtmaterial und ein zweites Nahtmaterial verwendet wird, wobei die Materialeigenschaften des ersten Nahtmaterials von den Materialeigenschaften des zweiten Nahtmaterials verschieden sind.
